# EUROPEAN PATENT SPECIFICATION

(11) **EP 1 559 149 B1**
(45) Date of publication and mention of the grant of the patent: **23.05.2012**
(21) Application number: 02769232.6
(22) Date of filing: 08.05.2002
(51) Int. Cl.: H01M 10/0525, H01M 10/0567

(54) **ELECTROLYTE COMPRISING NON-IONIC SURFACTANT AND LITHIUM ION BATTERY USING THE SAME**
ELEKTROLYT MIT NICHT-IONISCHEM OBERFLÄCHENAKTIVEM MITTEL UND DIESEN ELEKTROLYT VERWENDENE LITHIUM-IONEN-BATTERIE
ELECTROLYTE CONTENANT UN TENSIOACTIF NON IONIQUE ET PILE AU LITHIUM-ION UTILISANT CET ELECTROLYTE

(30) Priority: 09.05.2001 KR 2001025312
(43) Date of publication of application: 03.08.2005
(73) Proprietor: LG Chem, Ltd., Seoul 150-721 (KR)
(72) Inventor: KIM, Hyeong-Jin, Yuseong-ku Taejeon-city 305-340 (KR); LEE, Yeon-Hee, Yuseong-ku Taejeon-city 305-340 (KR); CHUNG, Bong-Youl, Yuseong-ku Taejeon-city 305-345 (KR); KIM, Young-Keun, Seo-ku Taejeon-city 302-777 (KR)
(74) Representative: Casalonga, Axel
(86) International application number: PCT/KR2002/000853
(87) International publication number: WO 2002/091497

(56) References cited:
- JP-A- 8 007 923
- JP-A- 2000 173 651
- JP-A- 2001 060 464

## Description

### BACKGROUND OF THE INVENTION

### (a) Field of the Invention

The present invention relates to an electrolyte comprising a non-ionic surfactant and a lithium ion battery using the same, and more particularly, to a non-aqueous electrolyte for a lithium ion battery comprising a fluorine-based non-ionic surfactant.

### (b) Description of the Related Art

Ever since the commercialization of lithium ion liquid secondary batteries by Sony Co., the lithium ion liquid secondary battery has been used increasingly in portable computers, cellular phones, etc., instead of the prior art lithium ion secondary batteries as a result of its high energy density. The lithium ion liquid secondary battery comprises an anode including carbonaceous material as an anode active material and a cathode including metal oxide of LiCoO₂, etc. as a cathode active material, and is prepared by intercalating a porous polyolefin-based separator between the anode and the cathode, then by injecting a non-aqueous electrolyte having a lithium salt of LiPF₆, etc. When the battery charges, the lithium ions of the cathode active material are released and then inserted into the carbon layer of the anode. When the battery discharges, the opposite occurs with the lithium ions of a carbon layer of an anode being released and then inserted into the cathode active material.

The non-aqueous electrolyte plays a mediating role moving the lithium ions between the anode and the cathode. The electrolyte should be stable within the scope of the operation voltage of the battery, and be able to transfer the ions sufficiently at a fast velocity. As an electrolyte, U.S. Pat. Nos. 5,521,027 and 5,525,443 discloses an admixture electrolyte of a linear carbonate and cyclic carbonate. The cyclic carbonate has a large polarity and thus is sufficiently capable of dissociating lithium, but has high viscosity. Therefore, in these patents, mixing linear carbonate with a low polarity and a low viscosity reduces the viscosity of the electrolyte comprising the cyclic carbonate. The different linear carbonates include dimethyl carbonate (DMC), diethyl carbonate (DEC), ethyl methyl carbonate (EMC), etc. The different cyclic carbonates include ethylene carbonate (EC), propylene carbonate (PC), vinylene carbonate (VC), butylene carbonate (BC), etc. The use of cyclic carbonates is necessary when it is desired to obtain a high capacity, good temperature properties, and a safe battery configuration, and particularly, when using electrolytes having a high viscosity such as EC, PC, etc.

The non-aqueous electrolyte decreases operational efficiency because it is slowly penetrated into the active material of the electrodes, and thus the performance of the battery deteriorates by increasing the impedance thereof because a sufficient capacity of the battery cannot be utilized. Accordingly, in order to improve an interfacial property between the non-aqueous electrolyte and electrodes, Japanese Patent Publication Hei 8-306386 discloses a method of adding an anionic surfactant to an electrolyte. However, satisfactory results have not been obtained with these two methods. Japanese Patent Publication JP 8007923 discloses that the charging/discharging characteristics of a lithium ion battery can be improved by adding a fluorine-based ionic surface active agent to the organic electrolyte. However such ionic surfactants can show decreased operational battery efficiency, resulting from the interaction of the ionic surfactant with the ions (such as Li^{+,} or PF⁶⁻) which are present in the electrolyte. Japanese Patent Publication JP 200173651 discloses that the impedance of a lithium ion battery can be reduced by adding a fluorine-containing non-ionic surfactant, composed of a fluoropolyoxyethylene ether, to the electrolyte. The surfactant that is contained In an electrolyte should not affect the other properties of a battery, should be stable in the operation voltage range of a battery and increase an interfacial activity between electrodes and an electrolyte.

### SUMMARY OF THE INVENTION

The present invention was made In consideration of the problems of the prior art, and it is an object of the present invention to provide an electrolyte additive comprising a fluorlne-based non-ionic surfactant, which can improve impedance properties of a battery by improving an interfacial property between an electrolyte and electrodes, and which can be used In preparing a lithium ion secondary battery having a high capacity and high efficiency.

It is another object of the present invention to provide a lithium ion battery comprising the electrolyte addictive.

In order to achieve these objects, the present invention provides a non-aqueous electrolyte for a lithium ion battery comprising a fluorine-based non-ionic surfactant represented by the following Formula 1: 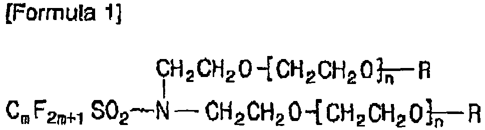 wherein, R Is hydrogen, an acetyl group, a methyl group or a benzoyl group; and
m and n are integers from 2 to 20.

The present invention also provides a lithium ion battery comprising:
a) graphitized carbon that can reversibly store and release lithium as an anode active material;
b) lithium-containing transition metal oxide that can reversibly store and release lithium as a cathode active material;
c) a porous separator; and
d) a non-aqueous, electrolyte comprising:
   i) a lithium salt;
   ii) an electrolyte compound; and
   iii) a fluorlne-based non-ionic surfactant represented by Formula 1.

### BRIEF DESCRIPTION OF THE DRAWINGS

Fig. 1 is a graph comparing impedance properties of lithium ion batteries of the present invention (Examples 1 to 6) and of general batteries;
Fig. 2 Is a graph comparing impedance properties of lithium ion batteries of the present invention (Examples 6 to 12) and of general batteries; and
Fig. 3 is a graph comparing impedance properties of lithium ion batteries of the present invention (Examples 13 to 14) and of general batteries.

### DETAILED DESCRIPTION AND THE PREFERRED EMBODIMENTS

The present invention will now be explained in more detail.

The present invention relates to an electrolyte comprising a fluorine-based non-ionic surfactant represented by Formula 1 above. In addition, the present invention provides a lithium ion secondary battery comprising an anode including graphitized carbon, a cathode including lithium-containing transition metal oxide, a porous separator and an electrolyte containing a fluorine-based non-ionic surfactant represented by Formula 1, in which the secondary battery has a large capacity and improved impedance properties.

Generally, EC, which is a cyclic carbonate used for a battery employing a graphitized carbon anode, has a high solubility for lithium salts and a high ion conductivity. However, when EC is used in excess, it rapidly decreases low temperature properties of an electrolyte because it has a melting point that is higher than room temperature. In order to solve this problem, 2-ingredient electrolytes containing linear carbonates having a low melting point and a low viscosity have generally been used. Nevertheless, such an electrolyte increases impedance to deteriorate battery performance during high-speed charging/discharging because it takes a long time for the electrolyte to penetrate into an active material of electrodes when injected into a battery, and a sufficient capacity cannot be obtained from the active material even with a long charge time.

The present invention can decrease the impedance of the whole cell by adding a fluorine-based non-ionic surfactant represented by Formula 1 to an electrolyte such that the easy penetration of an electrolyte into electrodes occurs to decrease interfacial resistance. The surfactant added should not affect the other properties of the battery and should be stable in the operation voltage range of the battery. The surfactant represented by Formula 1 used in the present invention is a high molecular compound substituted at each hydroxy group of its end group with acetyl, methyl or a benzoyl group by a common organic synthetic process in order to eliminate reactivity with an electrolyte. For example, MEGAFAC F-142D (n=10), F-144D (n=20) and F-142P (n=10, high purity) purchased from DIANIPPON INK & CHEMICALS Company are substituted at each hydroxy group of each end group with acetyl, methyl and benzoyl groups respectively to be used in the present invention.

The fluorine-based non-ionic surfactant represented by Formula 1 has a hydrophobic group using a fluorocarbon ring instead of a hydrocarbon ring, which is resistant to heat and chemicals since it has strong carbon-fluorine bonds, and particularly which does not affect the other properties of the battery since it remains stable during charging/discharging of a battery. In addition, one end of the surfactant that is covered with fluorocarbon has a much higher interfacial tension at the surface of the solid electrode to improve the interfacial properties between a solid electrode and an organic solvent.

Meanwhile, the present invention prepares a lithium ion secondary battery having a large capacity and improved impedance properties using an electrolyte comprising a fluorine-based non-ionic surfactant represented by Formula 1.

The lithium ion battery of the present invention comprises a graphitized carbon that can reversibly store and release lithium as an anode active material; lithium-containing transition metal oxides that can reversibly store and release lithium as a cathode active material; a porous separator; and a non-aqueous electrolyte comprising a lithium salt, an electrolyte compound and a fluorine-based non-ionic surfactant represented by Formula 1.

The graphitized carbon has preferably an interplanar spacing of d002 of 0.338 nm or less as measured by X-ray diffraction of carbonaceous material, and has a specific surface area of 10 m²/g or less as measured by the Brunauer-Emmett-Teller (BET) method.

The lithium-containing transition metal oxide is preferably selected from the group consisting of LiCoO₂, LiNiO₂, LiMn₂O₄ and LiNi₁₋ₓCoₓO₂ (0 < x<1).

The lithium salt is preferably at least one selected from the group consisting of LiCIO₄, LiCF₃SO₃, LiPF₆, LiBF₄, LiAsF₆ and LiN(CF₃SO₂)₂.

The electrolyte compound is preferably selected from the group consisting of ethylene carbonate, propylene carbonate, butylene carbonate, vinylene carbonate, diethyl carbonate, dimethyl carbonate, ethyl methyl carbonate, gamma-butyrolactone (GBL), sulfolane, methyl acetate, and methyl propionate.

Futhermore, the contents of the fluorine-based non-ionic surfactant represented by Formula 1 is preferably 0.01 to 1 wt% of the electrolyte.

The battery using the components as mentioned above uses, for example, an anode comprising carbon active material and a polyvinylidene difluoride binder, and a cathode comprising lithium transition metal oxide active material, conductive carbon and a polyvinylidene difluoride binder to realize a lithium ion battery.

As mentioned above, the present invention prepares a lithium ion battery using a fluorine-based ethylene oxide surfactant represented by Formula 1, thereby enabling sufficient penetration of the electrolyte into the active material of the battery to decrease the impedance in the battery. This increases the capacity of the active material and charge/discharge efficiency.

Hereinafter, the present invention is described more in detail through EXAMPLES and COMPARATIVE EXAMPLES. However, the following EXAMPLES are presented to enable better understanding of the present invention, and the present invention is not limited to the following EXAMPLES.

### EXAMPLES

### [Preparation Example 1]

### (Synthesis of a fluorine-based ethylene oxide resin surfactant F-142d-Ac substituted with acetate at the end)

F-142d (average n=10, mean molecular weight = 1379, 2.50g) and triethylamine (0.44g) were dissolved in dichloromethane (25 mL), and acetyl chloride (0.57g) was slowly added thereto at 0°C under nitrogen atmosphere. After elevating the temperature of the mixture to room temperature, the mixture was stirred for 15 hours. After the reaction was completed, the produced solids were filtered and the solvent was distilled under reduced pressure. Diethyl ether (25 mL) was added thereto to further produce solids not produced in dichloromethane. The solids were filtered and removed, and diethyl ether was distilled under reduced pressure and removed to obtain a liquid product. An acetyl group of the product was identified by the peak near 4.2 ppm using a Bruker 300 MHz NMR.

### [Preparation Example 2]

### (Synthesis of a fluorine-based ethylene oxide resin surfactant F-144d-Ac substituted with acetyl at the end)

F-144d (average n = 20, mean molecular weight = 2260, 2.50 g) and triethylamine (0.27 g) were dissolved in dichloromethane (25 mL) and acetyl chloride (0.57 g) was slowly added thereto at 0°C under nitrogen atmosphere. After elevating the temperature of the mixture to room temperature, the mixture was stirred for 15 hours. After the reaction was completed, the produced solids were filtered and the solvent was distilled under reduced pressure. Diethyl ether (25 mL) was added thereto to further produce solids not produced in dichloromethane. The solids were filtered and removed, and diethyl ether was distilled under reduced pressure and removed to obtain a liquid product.

### [Preparation Example 3]

### (Synthesis of a fluorine-based ethylene oxide resin surfactant F-142d-Me substituted with a methyl group at the end)

Potassium hydroxide powder (85%, 0.72 g) was slowly added to a solution of F-142d (average n = 10, mean molecular weight = 1379, 2.5 g) and 1,4-dioxane (5 mL) while stirring in a bath at 65°C. Dimethyl sulfate (0.35 mL) was added thereto at a rate of 3 drops per 5 minutes. The mixture was further stirred in a bath at 65°C for 3 hours.

After the reaction was completed, the produced solids were filtered and the solvent was distilled under reduced pressure. Layers were separated using dichloromethane (25 mL) and water (25 mL), the organic layer was taken and dried using anhydrous MgSO₄, and the organic solvent was distilled under reduced pressure to obtain a liquid product. A methyl group of the product was identified by the peak near 3.38 ppm using a Bruker 300 MHz NMR.

### [Preparation Example 4]

### (Synthesis of a fluorine-based ethylene oxide resin surfactant F-144d-Me substituted with a methyl group at the end)

Potassium hydroxide powder (85%, 0.44 g) was slowly added to a solution of F-144d (average n = 20, mean molecular weight = 2260, 2.5 g) and 1,4-dioxane (5 mL) while stirring in a bath at 65°C. Dimethyl sulfate (0.21 mL) was added thereto at a rate of 3 drops per 5 minutes. The mixture was further stirred in a bath at 65°C for 3 hours.

After the reaction was completed, the produced solids were filtered and the solvent was distilled under reduced pressure. Layers were separated using dichloromethane (25 mL) and water (25 mL), the organic layer was taken and dried using anhydrous MgSO₄, and the organic solvent was distilled under reduced pressure to obtain a liquid product.

### [Preparation Example 5]

### (Synthesis of a fluorine-based ethylene oxide resin surfactant F-142d-Bz substituted with a benzoyl group at the end)

F-142d (average n = 10, mean molecular weight = 1379, 2.5 g) and triethylamine (0.44 g) were dissolved in dichloromethane (25 mL) and benzoyl chloride (0.84 mL) was slowly added thereto at 0°C under nitrogen atmosphere. After elevating the temperature of the mixture to room temperature, the mixture was stirred for 15 hours.

After the reaction was completed, the produced solids were filtered and the solvent was distilled under reduced pressure. Diethyl ether (25 mL) was added thereto and triethylamine (0.44 g) was further added, and the mixture was stirred for 30 minutes. Further produced solids not produced in dichloromethane and benzoyl chloride trimethyamine salt were filtered and removed, then diethyl ether was distilled under reduced pressure and removed to obtain a liquid product. A benzoyl group of the product was identified by the peak near 7.46, 7.57, and 8.08 ppm using a Bruker 300 MHz NMR.

### [Preparation Example 6]

### (Synthesis of a fluorine-based ethylene oxide resin surfactant F-144d-Bz substituted with a benzoyl group at the end)

F-144d (average n = 20, mean molecular weight = 2260, 2.5 g) and triethylamine (0.27 g) were dissolved in dichloromethane (25 mL) and benzoyl chloride (0.51 mL) was slowly added thereto at 0°C under nitrogen atmosphere. After elevating to the temperature of the mixture to room temperature, the mixture was stirred for 15 hours.

After the reaction was completed, the produced solids were filtered and the solvent was distilled under reduced pressure. Diethyl ether (25 mL) was added thereto and triethylamine (0.44 g) was also further added, and the mixture was stirred for 30 minutes. Further produced solids not produced in dichloromethane and benzoyl chloride· trimethyamine salt were filtered and removed, and diethyl ether was distilled under reduced pressure and removed to obtain a liquid product.

### [Preparation Examples 7-12]

### (Preparation of an electrolyte)

Each 0.1 wt% of the fluorine-based non-ionic surfactant prepared according to Preparation Examples 1 to 6 was added to a 1 M LiPF₆ solution with a composition of EC : EMC = 1 : 1 using F-EC and F-EMC purchased from Mitsubishi Chem. Company in a glove box to prepare electrolytes of Preparation Examples 7 to 12.

### [Preparation Examples 13 - 18]

### (Preparation of an electrolyte)

Except for changing the amount of the added fluorine-based non-ionic surfactants from 0.1 wt% to 0.01 wt%, electrolytes of Preparation Examples 13 to 18 were prepared by the same method as in Preparation Examples 7 to 12.

### [Comparative Preparation Example 1]

### (Preparation of an electrolyte)

A 1 M LiPF₆ electrolyte with a composition of EC : EMC = 1 : 1 was prepared using F-EC and E-EMC purchased from Mitsubishi Chem. Company in a glove box.

### [Examples 1 -12]

### (Preparation of a Lithium Ion Battery)

93% of carbon active material (MCMB-10-28 from Osaka Gas) and 7% of polyvinylidene difluoride (PVDF, Kynar 761 product from Elf Atochem Company) were mixed in a mixer (Ika Company) for 2 hours using pyrrolidone (NMP) as a solvent, and the mixture was coated on a copper foil collector and dried at 130°C to prepare an anode. 91% of LiCoO₂, 3% of PVDF (Kynar 761) and 6% of conductive carbon (KS-6 from Lonza Company) were mixed in a mixer (Ika Company) for 2 hours using N-methyl-2-pyrrolidone (NMP), and the mixture was coated on an aluminum foil collector and dried at 130°C to prepare a cathode. Celgard 2400 (from Hoechst Celanese Company) was put between the prepared anode and cathode for use as a separator to fabricate a coin-type battery, and the electrolytes prepared in Preparation Examples 7 to 18 were respectively injected therein to prepare lithium ion batteries of Examples 1 to 12. The batteries were charged to 4.2 V and discharged to 3V to perform a charge/discharge test. The results of the test are summarized in Table 1.

### [Comparative Example 1]

### (Preparation of a Lithium Ion Battery)

Except for the injection of the electrolyte prepared in Comparative Preparation Example 1, a lithium ion battery was prepared by the same method as in Example 1. A charge/discharge test was performed by the same method as in Example 1, the results of which are presented in Table 1.

**[Table 1]**

| | Surfactant (wt%) | | Initial Capacity of Battery (mAh) | Initial Charge Efficiency |
|---|---|---|---|---|
| Comparative Example 1 | | | 3.75 | 87.62 |
| Example 1 | 142d-Ac | 0.1 | 3.81 | 89.81 |
| Example 2 | 144d-Ac | 0.1 | 3.80 | 89.38 |
| Example 3 | 142d-Me | 0.1 | 3.82 | 88.25 |
| Example 4 | 144d-Me | 0.1 | 3.84 | 88.96 |
| Example 5 | 142d-Bz | 0.1 | 3.83 | 88.75 |
| Example 6 | 144d-Bz | 0.1 | 3.82 | 88.75 |
| Example 7 | 142d-Ac | 0.01 | 3.80 | 88.97 |
| Example 8 | 144d-Ac | 0.01 | 3.78 | 89.62 |
| Example 9 | 142d-Me | 0.01 | 3.89 | 89.14 |
| Example 10 | 144d-Me | 0.01 | 3.78 | 86.61 |
| Example 11 | 142d-Bz | 0.01 | 3.72 | 87.35 |
| Example 12 | 144d-Bz | 0.01 | 3.79 | 88.59 |

### [Experiment 1]

### (Impedance Properties)

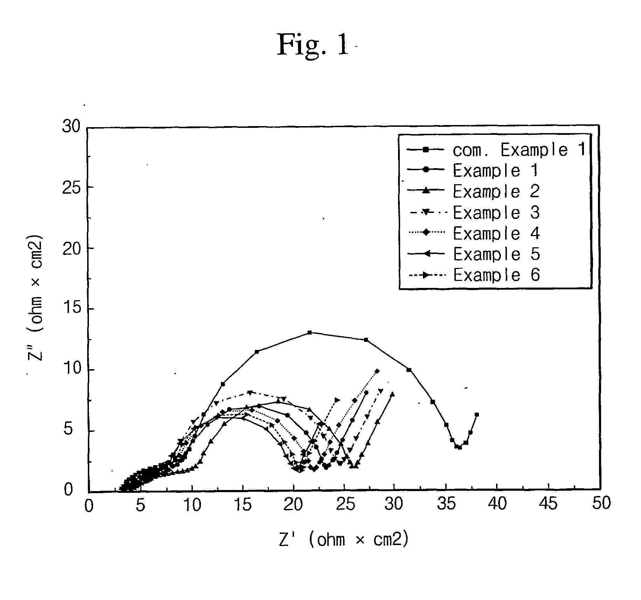

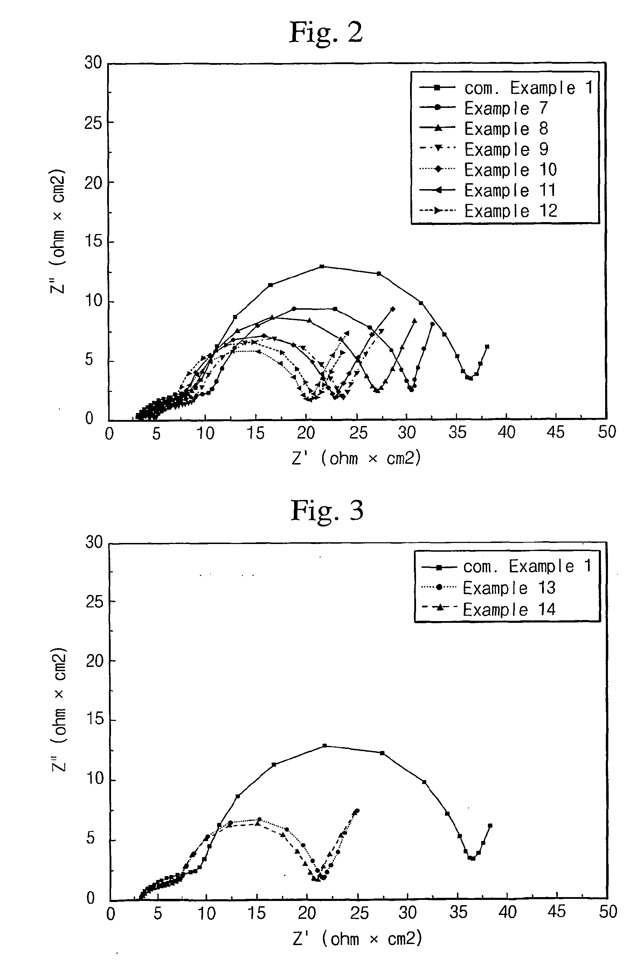

The batteries prepared in Examples 1 to 12 and Comparative Example 1 were charged to 4.2 V and discharged to 3.0 V, then after this process was repeated, the batteries were charged to 4.2 V again and an impedance of the batteries was measured. The impedance was measured by scanning from 1MHz to 1 mHz using a Potentiostat/Galvanostat, Model 273A from EG & G PRINCETON APPLIED RESEARCH Company and the SI 1260 Impedance/Gain-phase analyzer from Solatron Instruments Company. The results of the measurements are presented in Figs. 1 and 2.

### [Preparation Example 19]

### (Synthesis of a fluorine-based ethylene oxide resin surfactant F-142P-Ac substituted with acetate at the end)

An acetate-substituted fluorine-based ethylene oxide resin surfactant having a higher purity than 142d-Ac was obtained using MEGAFAC F-142P (n=10) from DIANIPPON INK & CHEMICALS Company by the same method as in Preparation Example 1.

### [Preparation Example 20]

### (Preparation of an Electrolyte)

0.1 wt% of the surfactant synthesized in Preparation Example 19 was added to a 1 M LiPF₆ solution with a composition of EC : EMC = 1: 1 using F-EC and F-EMC purchased from Mitsubishi Chem. Company in a globe box to prepare an electrolyte.

### [Preparation Example 21]

### (Preparation of an Electrolyte)

0.01 wt3% of the surfactant synthesized in Preparation Example 19 was added to a 1 M LIPF, solution with a composition of EC : EMC = 1: 1 using F-EC and F-EMC purchased from Mitsubishi Chem. Company in a glove box to prepare an electrolyte.

### [Examples 13 - 14]

### (Preparation of Lithium Ion Battery)

Lithium ion batteries of Examples 13 to 14 were prepared using the electrolytes of Preparation Examples 20 and 21, respectively, by the same method as in Example 1.

### [Experiment 2]

### (Battery Performance Test)

An initial capacity, an initial charge efficiency and impedance properties of the batteries prepared in Examples 13 and 14 were measured by the same method as in Examples 1 to 12. The results are presented in Table 2 and Fig. 3

**[Table 2]**

| | Surfactant (wt%) | | Initial Battery Capacity (mAh) | Initial Charge Efficiency |
|---|---|---|---|---|
| Comparative Example 1 | - | - | 3.75 | 87.62 |
| Example 13 | 142P-Ac | 0.1 | 3.80 | 88.31 |
| Example 14 | 144P-Ac | 0.01 | 3.79 | 88.40 |

As explained above, the lithium ion battery prepared according to the present invention uses an electrolyte comprising a fluorine-based non-ionic surfactant substituted with various functional groups at the end as represented by Formula 1, which improves an interfacial property between an electrolyte and electrodes and impedance properties, and exhibits a high capacity and excellent charge/discharge properties.

## Claims

1. A non-aqueous electrolyte for a lithium ion battery comprising a fluorine-based non-ionic surfactant represented by Formula 1: 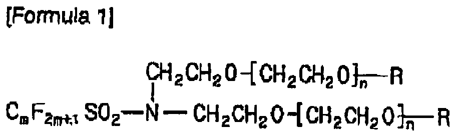 wherein, R is hydrogen, an acetyl group, a methyl group or a benzoyl group; and
m and n are integers from 2 to 20.

2. A lithium ion battery comprising:
a) graphitized carbon that can reversibly store and release lithium as an anode active material;
b) lithium-containing transition metal oxide that can reversibly store and released lithium as a cathode active material;
c) a porous separator; and
d) a non-aqueous electrolyte comprising
i) a lithium salt;
ii) an electrolyte compound; and
iii) a fluorine-based non-ionic surfactant represented by Formula 1: 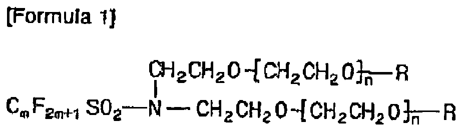
wherein, R is hydrogen, an acetyl group, a methyl group or a benzoyl group; and
m and n are integers from 2 to 20.

3. The lithium ion battery according to Claim 2, wherein the a) graphitized carbon has an interplanar spacing of d002 of 0.338 nm or less as measured by X-ray diffraction of carbonaceous material, and has a specific surface area of 10 m²/g or less as measured by the Brunauer-Emmett-Teller (BET) method.

4. The lithium ion battery according to Claim 2, wherein the b) lithium-containing transition oxide is selected from the group consisting of LiCoO₂, LiN1O₂, LiMn₂O₄, and LiNi₁₋ₓCoₓO₂(0<x<1).

5. The lithium ion battery according to Claim 2, wherein the c) I) lithium salt is selected from the group consisting of LiCIO₄, LiCF₉SO₃, LiPF₆, LiBF₄, LiAsF₈ and LiN(CF₃SO₂)₂.

6. The lithium ion battery according to Claim 2, wherein the c) ii) electrolyte compound is at least one selected from the group consisting of ethylene carbonate, propylene carbonate, butylene carbonate, vinylene carbonate, diethyl carbonate, dimethyl carbonate, ethyl methyl carbonate, gamma-butyrolactone (GBL), sulfolane, methyl acetate, and methyl propionate.

7. The lithium ion battery according to Claim 2, wherein the content of the c) iii) fluorine-based non-ionic surfactant represented by Formula 1 is 0.01 to 1 wt% of the electrolyte.

## Patentansprüche

1. Nicht-wässriger Elektrolyt für eine Lithium-Ionen-Batterie mit einem fluorbasierten nichtionischen Tensid, das durch Formel 1 repräsentiert wird: 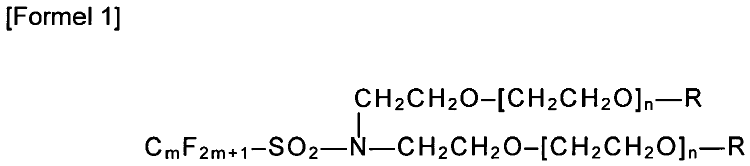 worin R Wasserstoff, eine Acetylgruppe, eine Methylgruppe oder eine Benzoylgruppe ist; und
m und n ganze Zahlen von 2 bis 20 sind.

2. Lithium-Ionen-Batterie, die Folgendes umfasst:
a) graphitisierten Kohlenstoff, der Lithium als aktives Anodenmaterial reversibel speichern und freisetzen kann;
b) lithiumhaltiges Übergangsmetalloxid, das Lithium als aktives Kathodenmaterial reversibel speichern und freisetzen kann;
c) ein poröses Trennelement; und
d) einen nicht-wässrigen Elektrolyt, der Folgendes umfasst:
i) ein Lithiumsalz;
ii) eine Elektrolytverbindung; und
iii) ein fluorbasiertes nichtionisches Tensid, das durch Formel 1 repräsentiert wird: 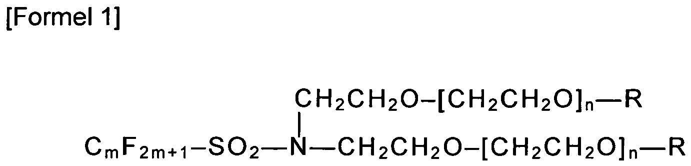
worin R Wasserstoff, eine Acetylgruppe, eine Methylgruppe oder eine Benzoylgruppe ist; und
m und n ganze Zahlen von 2 bis 20 sind.

3. Lithium-Ionen-Batterie nach Anspruch 2, wobei der a) graphitisierte Kohlenstoff einen Kristallebenenabstand d002 von 0,338 nm oder weniger hat, gemessen durch Röntgenbeugung von kohlenstoffhaltigem Material, und eine spezifische Oberfläche von 10 m²/g oder weniger, gemessen nach der Brunauer-Emmett-Teller-Methode (BET-Methode).

4. Lithium-Ionen-Batterie nach Anspruch 2, wobei das b) lithiumhaltige Übergangsmetalloxid aus der aus LiCoO₂, LiNiO₂, LiMn₂O₄ und LiNi₁₋ₓCoₓO₂ (0 < x < 1) bestehenden Gruppe ausgewählt ist.

5. Lithium-Ionen-Batterie nach Anspruch 2, wobei das c) i) Lithiumsalz aus der aus LiCIO₄, LiCF₃SO₃, LiPF₆, LiBF₄, LiAsF₆ und LiN(CF₃SO₂)₂ bestehenden Gruppe ausgewählt ist.

6. Lithium-Ionen-Batterie nach Anspruch 2, wobei die c) ii) Elektrolytverbindung mindestens eine Verbindung ist, die aus der aus Ethylencarbonat, Propylencarbonat, Butylencarbonat, Vinylencarbonat, Diethylcarbonat, Dimethylcarbonat, Ethylmethylcarbonat, gamma-Butyrolacton (GBL), Sulfolan, Methylacetat und Methylpropionat bestehenden Gruppe ausgewählt ist.

7. Lithium-Ionen-Batterie nach Anspruch 2, wobei der Anteil des c) iii) fluorbasierten nichtionischen Tensids, das durch Formel 1 repräsentiert wird, 0,01 bis 1 Gew.-% des Elektrolyten beträgt.

## Revendications

1. Electrolyte non-aqueux pour accumulateur lithium-ion, comprenant un tensioactif non-ionique fluoré, de formule 1 : 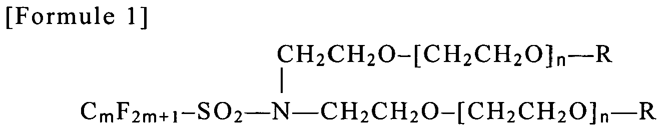 dans laquelle R représente un atome d'hydrogène, un groupe acétyle, un groupe méthyle ou un groupe benzoyle, et les indices m et n sont des nombres entiers qui valent de 2 à 20.

2. Accumulateur lithium-ion comprenant :
a) en tant que matière active d'anode, du carbone graphitisé qui peut, de manière réversible, stocker et libérer du lithium ;
b) en tant que matière active de cathode, un oxyde de métal de transition contenant du lithium, qui peut, de manière réversible, stocker et libérer du lithium ;
c) un séparateur poreux ;
d) et un électrolyte non-aqueux comprenant :
i) un sel de lithium,
ii) un composé d'électrolyte,
iii) et un tensioactif non-ionique fluoré, de formule 1 : 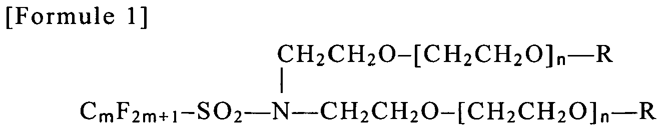
dans laquelle R représente un atome d'hydrogène, un groupe acétyle, un groupe méthyle ou un groupe benzoyle, et les indices m et n sont des nombres entiers qui valent de 2 à 20.

3. Accumulateur lithium-ion conforme à la revendication 2, dans lequel le carbone graphitisé (a) présente une distance inter-planaire d002, mesurée par diffraction des rayons X par le matériau carboné, égale ou inférieure à 0,338 nm, ainsi qu'une aire spécifique, mesurée par la méthode BET (Brunauer-Emmett-Teller), égale ou inférieure à 10 m²/g.

4. Accumulateur lithium-ion conforme à la revendication 2, dans lequel l'oxyde (b) de métal de transition contenant du lithium est choisi dans l'ensemble formé par les composés de formules LiCoO₂, LiNiO₂, LiMn₂O₄ et LiNi₁₋ₓCoₓO₂ (avec 0 < x < 1).

5. Accumulateur lithium-ion conforme à la revendication 2, dans lequel le sel de lithium (c-i) est choisi dans l'ensemble formé par les composés de formules LiClO₄, LiCF₃SO₃, LiPF₆, LiBF₄, LiAsF₆ et L₁N(CF₃SO₂)₂·

6. Accumulateur lithium-ion conforme à la revendication 2, dans lequel le composé d'électrolyte (c-ii) est au moins un composé choisi dans l'ensemble formé par les suivants : carbonate d'éthylène, carbonate de propylène, carbonate de butylène, carbonate de vinylène, carbonate de diéthyle, carbonate de diméthyle, carbonate d'éthyle et de méthyle, gamma-butyrolactone (GBL), sulfolane, acétate de méthyle, et propionate de méthyle.

7. Accumulateur lithium-ion conforme à la revendication 2, dans lequel la quantité de tensioactif non-ionique fluoré (c-iii) de formule 1 contenue dans l'électrolyte représente de 0,01 à 1 % du poids de celui-ci.
